# EUROPEAN PATENT SPECIFICATION

(11) **EP 3 789 596 B1**
(45) Date of publication and mention of the grant of the patent: **27.11.2024**
(21) Application number: 20193428.8
(22) Date of filing: 28.08.2020
(51) Int. Cl.: F02C 7/22, F02C 7/228, F02C 9/34, F02C 9/42

(54) **METHOD OF OPERATING A GAS TURBINE ENGINE AT A LOW POWER CONDITION**
VERFAHREN ZUM BETRIEB EINES GASTURBINENMOTORS BEI NIEDRIGER LEISTUNG
PROCÉDÉ DE FONCTIONNEMENT D'UN MOTEUR À TURBINE À GAZ DANS UNE CONDITION DE BASSE CONSOMMATION

(30) Priority: 04.09.2019 US 201962895641 P; 24.01.2020 US 202016751393
(43) Date of publication of application: 10.03.2021
(73) Proprietor: Pratt & Whitney Canada Corp., Longueuil, Québec J4G 1A1 (CA)
(72) Inventor: TARLING, Stephen, (01BE5) Longueuil, Québec J4G 1A1 (CA); BEAUCHESNE-MARTEL, Philippe, (01BE5) Longueuil, Québec J4G 1A1 (CA); VERHIEL, Jeffrey, (01BE5) Longueuil, Québec J4G 1A1 (CA)
(74) Representative: Dehns

(56) References cited:
- EP-A2- 1 849 975
- EP-A2- 2 778 372
- US-A1- 2003 200 754
- US-A1- 2018 080 378
- US-A1- 2018 163 636

## Description

### TECHNICAL FIELD

The disclosure relates generally to gas turbine engines, and more particularly to the operation of gas turbine engines at low power conditions.

### BACKGROUND

Helicopters are often provided with at least two turboshaft engines. Both engines are connected to drive the main rotor via a common reduction gearbox. Each of the engines is sized to account for the worst-case scenario of the other engine failing at takeoff. Accordingly, the power of each engine is significantly greater than what is required for cruising.

In cruising conditions, operating a single engine at a relatively high regime instead of both at a lower regime can allow significantly better fuel efficiency. However, once a turboshaft engine is stopped, there is a significant delay in starting it back up again. This delay is associated with the required amount of time to get the engine running at a sufficient RPM (and draw in a sufficient amount of air) for engine operation to begin. For safety purposes, the typical approach is not to shut down the second engine completely, but to keep it idling, which limits the gain in fuel efficiency.

A prior art method of operating a gas turbine engine having the features of the preamble to claim 1 is disclosed in EP 1,849,975. Other prior art methods of purging fuel from a manifold in a gas turbine engine are disclosed in EP 2,778,372, US 2003/0200754, and US 2018/163636 A1.

### SUMMARY

In one aspect, the disclosure describes a method of operating a gas turbine engine as disclosed in claim 1.

Features of embodiments are recited in the dependent claims.

Further details of the subject matter of this application will be apparent from the detailed description included below and the drawings.

### DESCRIPTION OF THE DRAWINGS

Reference is now made to the accompanying drawings, in which:
FIG. 1 is a schematic representation of an exemplary multi-engine (e.g., twin-pack) power plant for an aircraft;
FIG. 2 is a schematic representation illustrating an exemplary combustion chamber;
FIGS. 3A and 3B are schematic representations of part of an exemplary fuel system of a gas turbine engine;
FIGS. 4A-4G are schematic representations of an exemplary flow divider valve at different configurations; and
FIG. 5 depicts a method for operating a gas turbine.

### DETAILED DESCRIPTION

The following disclosure relates to multi-engine power plants for rotary-wing aircraft (e.g., helicopters) applications and associated methods of operation. In some embodiments, the disclosed multi-engine power plants may allow one engine of the power plant to operate in a low-power mode of operation while another engine is operated at a high-power mode of operation in some situations.

Aspects of various embodiments are described through reference to the drawings.

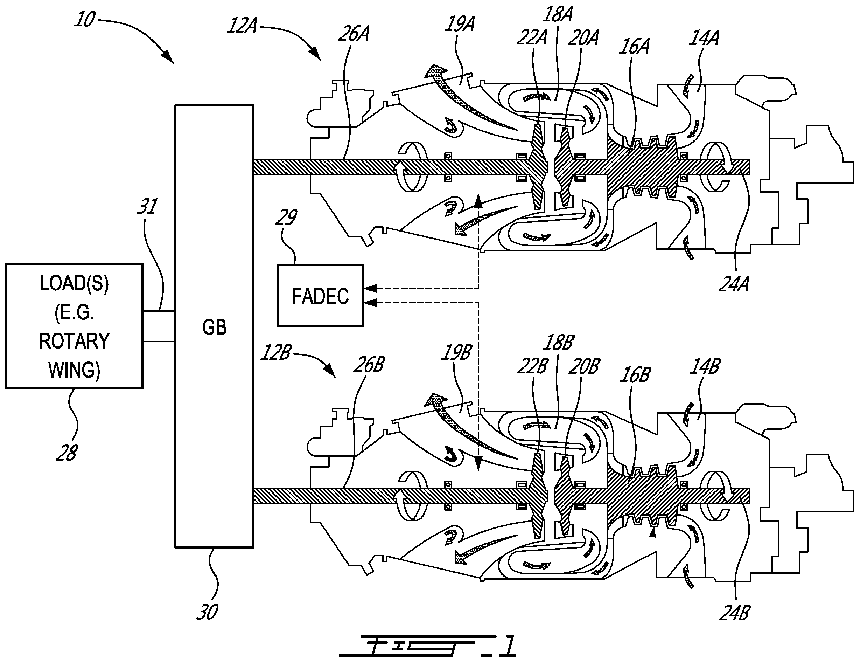

Turning now to Fig. 1, illustrated is an exemplary multi-engine system 10 (e.g., twin-pack), showing axial cross-section views of two exemplary gas turbine engines 12A and 12B, that may be used as a power plant for an aircraft, including but not limited to a rotorcraft such as a helicopter. The multi-engine system 10 may include two or more gas turbine engines 12A, 12B. In the case of a helicopter application, these gas turbine engines 12A, 12B will be turboshaft engines. Control of the multi-engine system 10 is effected by one or more controller(s) 29, which may be Full Authority Digital Engine Control(s) ("FADEC(s)"), electronic engine controller(s) (EEC(s)), or the like, that are programmed to manage, as described herein below, the operation of the engines 12A, 12B to reduce an overall fuel burn, particularly during sustained cruise operating regimes, wherein the aircraft is operated at a sustained (steady-state) cruising speed and altitude. The cruise operating regime is typically associated with the operation of prior art engines at equivalent part-power, such that each engine contributes approximately equally to the output power of the system 10. Other phases of a typical helicopter mission would include transient phases like take-off, climb, stationary flight (hovering), approach and landing. Cruise may occur at higher altitudes and higher speeds, or at lower altitudes and speeds, such as during a search phase of a search-and-rescue mission.

In the present description, while the aircraft conditions (cruise speed and altitude) are substantially stable, the engines 12A, 12B of the system 10 may be operated asymmetrically, with one engine operated in a high-power "active" mode and the other engine operated in a lower-power (which could be no power, in some cases) "standby" mode. Doing so may provide fuel saving opportunities to the aircraft, however there may be other suitable reasons why the engines are desired to be operated asymmetrically. This operation management may therefore be referred to as an "asymmetric mode" or an "asymmetric operating regime", wherein one of the two engines is operated in a lower power (which could be no power, in some cases) "standby mode" while the other engine is operated in a high-power "active" mode. In such an asymmetric operation, which is engaged for a cruise phase of flight (continuous, steady-state flight which is typically at a given commanded constant aircraft cruising speed and altitude). The multi-engine system 10 may be used in an aircraft, such as a helicopter, but also has applications in suitable marine and/or industrial applications or other ground operations.

Referring still to Fig. 1, according to the present description the multi-engine system 10 driving a helicopter may be operated in this asymmetric manner, in which a first of the turboshaft engines (say, 12A) may be operated at high power in an active mode and the second of the turboshaft engines (12B in this example) may be operated in a lower power (which could be no power in some cases) standby mode. In one example, the first turboshaft engine 12A may be controlled by the controller(s) 29 to run at full (or near-full) power conditions in the active mode, to supply substantially all or all of a required power and/or speed demand of the common load 28. The second turboshaft engine 12B may be controlled by the controller(s) 29 to operate at lower power or no-output-power conditions to supply substantially none or none of a required power and/or speed demand of the common load 28. Optionally, a clutch may be provided to declutch the low-power engine. Controller(s) 29 may control the engine's governing on power according to an appropriate schedule or control regime. The controller(s) 29 may comprise a first controller for controlling the first engine 12A and a second controller for controlling the second engine 12B. The first controller and the second controller may be in communication with each other in order to implement the operations described herein. In some embodiments, a single controller 29 may be used for controlling the first engine 12A and the second engine 12B.

In another example, an asymmetric operating regime of the engines may be achieved through the one or more controller's 29 differential control of fuel flow to the engines, as described in pending US patent application no. 16/535,256. Low fuel flow may also include zero fuel flow in some examples.

Although various differential control between the engines of the engine system 10 are possible, in one particular embodiment the controller(s)29 may correspondingly control fuel flow rate to each engine 12A, 12B accordingly. In the case of the standby engine, a fuel flow (and/or a fuel flow rate) provided to the standby engine may be controlled to be between 70% and 99.5% less than the fuel flow (and/or the fuel flow rate) provided to the active engine. In the asymmetric mode, the standby engine may be maintained between 70% and 99.5% less than the fuel flow to the active engine. In some embodiments of the method 500, the fuel flow rate difference between the active and standby engines, e.g. via the first and second manifolds respectfully, may be controlled to be in a range of 70% and 90% of each other, with fuel flow to the standby engine being 70% to 90% less than the active engine. In some embodiments, the fuel flow rate difference may be controlled to be in a range of 80% and 90%, with fuel flow to the standby engine being 80% to 90% less than the active engine.

In another embodiment, the controller 29 may operate one engine (say 12B) of the multi-engine system 10 in a standby mode at a power substantially lower than a rated cruise power level of the engine, and in some embodiments at substantially zero output power and in other embodiments less than 10% output power relative to a reference power (provided at a reference fuel flow). Alternately still, in some embodiments, the controller(s) 29 may control the standby engine to operate at a power in a range of 0% to 1 % of a rated full-power of the standby engine (i.e. the power output of the second engine to the common gearbox remains between 0% to 1% of a rated full-power of the second engine when the second engine is operating in the standby mode).

In another example, the engine system 10 of Fig. 1 may be operated in an asymmetric operating regime by control of the relative speed of the engines using controller(s) 29, that is, the standby engine is controlled to a target low speed and the active engine is controlled to a target high speed. Such a low speed operation of the standby engine may include, for example, a rotational speed that is less than a typical ground idle speed of the engine (i.e. a "sub-idle" engine speed). Still other control regimes may be available for operating the engines in the asymmetric operating regime, such as control based on a target pressure ratio, or other suitable control parameters.

Although the examples described herein illustrate two engines, asymmetric mode is applicable to more than two engines, whereby at least one of the multiple engines is operated in a low-power standby mode while the remaining engines are operated in the active mode to supply all or substantially all of a required power and/or speed demand of a common load.

In use, the first turboshaft engine (say 12A) may operate in the active mode while the other turboshaft engine (say 12B) may operate in the standby mode, as described above. During this asymmetric operation, if the helicopter needs a power increase (expected or otherwise), the second turboshaft engine 12B may be required to provide more power relative to the low power conditions of the standby mode, and possibly return immediately to a high- or full-power condition. This may occur, for example, in an emergency condition of the multi-engine system 10 powering the helicopter, wherein the "active" engine loses power the power recovery from the lower power to the high power may take some time. Even absent an emergency, it will be desirable to repower the standby engine to exit the asymmetric mode.

In the embodiments described herein gas turbine engines 12A, 12B may be referred to as turboshaft engines used in a power plant of a helicopter. However, it is understood that aspects of the present disclosure are not limited to engines of the turboshaft type and may be applicable to other types of gas turbine engines. Regarding to FIG. 1, each of engines 12A, 12B may comprise, in serial flow communication, air intake 14A, 14B through which ambient air is received, multistage compressor 16A, 16B for pressurizing the air, combustion chamber 18A, 18B in which the compressed air is mixed with fuel and ignited for generating an annular stream of hot combustion gases, and a turbine section for extracting energy from the combustion gases. Engines 12A, 12B may comprise respective exhaust ducts 19A, 19B via which the combustion gases exit engines 12A, 12B.

The turbine section may comprise one or more high-pressure turbines 20A, 20B and one or more low-pressure power turbines 22A, 22B. High-pressure turbine(s) 20A, 20B may be drivingly coupled to compressor 16A, 16B via high-pressure shaft 24A, 24B to form a high-pressure spool. Power turbine(s) 22A, 22B may be coupled to low-pressure power shaft 26A, 26B to form a low-pressure spool. Accordingly, each of engines 12A, 12B may have a dual-spool configuration.

In some embodiments, first engine 12A and second engine 12B may be of substantially identical construction and may have substantially identical power output ratings. Alternatively, in some embodiments, first engine 12A and second engine 12B may be of different constructions and may have different power output ratings.

First engine 12A and second engine 12B may be configured to drive common load 28. In some embodiments, load 28 may include a rotary wing of a rotary-wing aircraft. For example, load 28 may be a main rotor of a helicopter. Engines 12A, 12B may be drivingly coupled to load 28 via gear box 30, which may be of a speed-changing (e.g., reducing) type. For example, gear box 30 may have a plurality of inputs to receive mechanical energy from respective power shafts 26A, 26B of respective engines 12A, 12B. Gear box 30 may be configured to direct at least some of the combined mechanical energy from the plurality of engines 12A, 12B toward a common output shaft 31 for driving load 28 at a suitable operating (e.g., rotational) speed.

In some situations, it may be desirable (e.g., for improved fuel economy) to drive load 28 using mainly first engine 12A at a relatively high output power level, which may be a more fuel efficient operating regime while, second engine 12B is operated at a low power standby mode at which no useful power output to load 28 is produced but is enough to keep engine 12B running. In some embodiments, such standby mode may be below a "flight idle" mode of operation. Such situations may include a cruise phase of flight of the aircraft for example. Having second engine 12B operating in a low-power standby mode instead of being shut down may permit second engine 12B to remain ready to power-up in an emergency or other situation for example. Such other situations may include a climb or other manoeuver(s) performed by the aircraft where second engine 12B may be required to supplement first engine 12A.

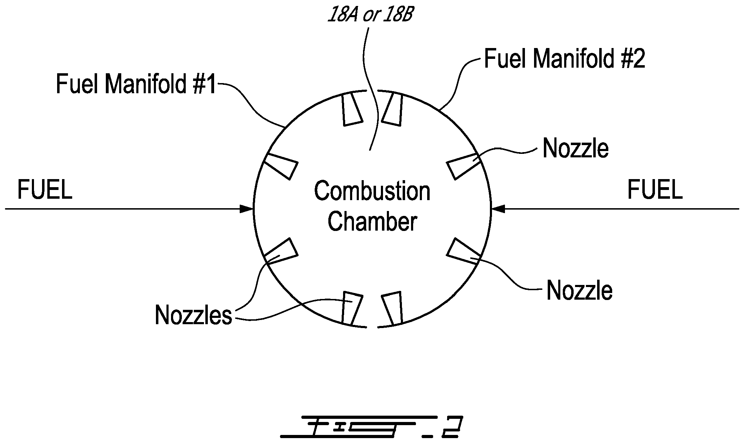

FIG. 2 is a schematic representation illustrating an exemplary combustion chamber 18A or 18B of engines 12A or 12B in conjunction with two fuel manifolds with associated respective fuel nozzles. During operation of both engines 12A, 12B at a power level above the low-power condition, fuel may be provided to two or more manifolds supplying fuel to respective one or more fuel nozzles delivering fuel to the combustion chambers 18A, 18B of both engines 12A, 12B. However, when it is desirable to operate with one engine 12B in a low-power standby mode during flight while the other engine 12A drives load 28, the fuel flow through at least some of the nozzles may be slow enough to present a risk of coking, which may be undesirable. Accordingly, it may be desirable to supply a higher fuel flow to fewer manifolds in order to maintain the low-power standby mode of operation of engine 12B while fuel flow to other manifold(s) is/are interrupted in order to reduce the potential for coking. In addition, it may also be desirable to purge the inactive fuel manifold(s) and associated nozzles of fuel to also reduce the risk of coking.

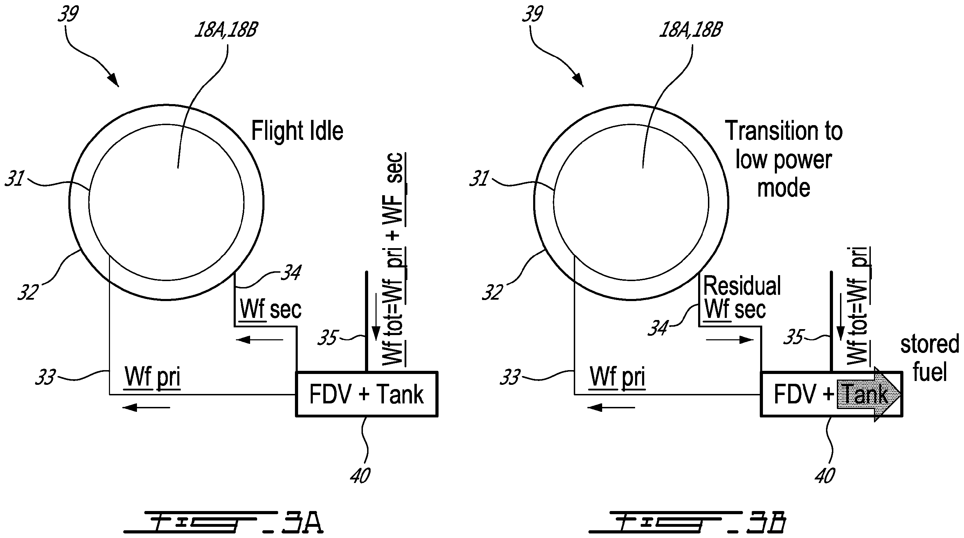

FIGS. 3A and 3B are schematic representations of an exemplary fuel system 39 of a gas turbine engine 12A or 12B. Fuel system 39 may include combustion chamber 18A or 18B, and a flow divider assembly (FDA) 40. Flow divider assembly (FDA) 40 may include one or more valves, e.g. spool-type flow divider valves, that may be suitable for controlling fuel flow to one or more fuel manifolds of one engine. FDA 40 may also include a fuel reservoir tank to receive fuel from a fuel manifold when the manifold is purged. FDA 40 may also direct fuel flow to one or more fuel manifolds. In the illustrated examples of FIGs. 3A, 3B, fuel system 39 has two manifolds, i.e. first manifold 31 and second manifold 32. The one or more valves of FDA 40 may be configured to direct the fuel pressurized by the fuel pump to the first manifold while stopping the flow of the fuel pressurized by a fuel pump (not shown) to other fuel manifolds, such as second manifold 32 in the example of FIGs. 3A and 3B. The one or more valves of FDA 40 may be configured to receive compressed gas from the combustor 18A, 18B to purge fuel in the manifold(s) 31 or 32, e.g. second manifold 32 in which fuel flow has stopped.

Fuel system 39, including first manifold 31 and second manifold 32, may operate in a flight idle condition illustrated in FIG. 3A. Fuel may be supplied to Flow Divider Assembly (FDA) 40 by a fuel pump via fuel supply line 35 at a flow rate Wfₜₒₜ which is equal to Wfₚᵣᵢ + Wf_{sec}. Fuel supply line 35 may receive fuel from a fuel pump (not shown) which pressurizes fuel to a desired pressure. FDA 40 may distribute flow to first manifold 31 and second manifold 32, via first manifold supply line 33 and second manifold supply line 34 respectively. Fuel to the first manifold 31 and second manifold 32 is illustrated as flow rates Wfₚᵣᵢ and Wf_{sec} respectively.

In flight idle mode, shown in FIG. 3A, the engine may not be operating efficiently with respect to fuel consumption due to flow rates to each fuel manifold being below an optimal condition. Accordingly, fuel flow Wfₚᵣᵢ may be increased so that the engine fed by first manifold 31 may operate more efficiently. Fuel system 39 may also be transitioned into a standby mode which is illustrated in FIG. 3B. As shown in FIG. 3B, fuel flow in fuel supply line 35 is sent to first manifold 31 while fuel flow to second manifold 32 is interrupted and stopped. When fuel flow to second manifold 32 is interrupted, Wfₚᵣᵢ may equal Wfₜₒₜ. Accordingly, in the example shown in FIG. 3B, fuel entering fuel system 39 is equal to fuel flow to first manifold 31. Diverting fuel from second manifold 32 to first manifold 31 may increase fuel flow in the first manifold 31 and optimize performance and fuel consumption in the gas turbine engine.

In reference to the example shown in FIG. 3B, residual fuel in second manifold 32 may be purged by introducing compressed gas, e.g. compressed gas such as pressurized air from a combustor 18A or 18B of the gas turbine engine 12A or 12B, into the second manifold 32 and associated fuel nozzles, which may pressure the residual fuel into a reservoir which may be separate and distinct from the fuel tank of the aircraft. FDA 40 may be configured to permit flow to first manifold 31 while receiving residual fuel purged from second manifold 32. Because residual fuel is purged from the second manifold 32 and associated fuel nozzle, the risk of coking at the fuel nozzles may be reduced or substantially eliminated.

During flight idle, or active operation, the one or more valves of FDA 40 may be configured to allow fuel to selectively flow through the fuel manifolds 31, 32, e.g. a first manifold and a second manifold, under a pressure produced by the fuel pump in a first mode of operation. The pressure may be the pump head pressure required to pump fuel through the fuel manifold and associated nozzles to the combustor. In a standby mode, i.e. a second mode of operation, the one or more valves of FDA 40 may be configured to allow fuel to flow back from the shut down manifold, e.g. second manifold 34 in FIG. 3B, through the one or more valves to the reservoir due to a pressure in the combustor, while continuing to flow fuel to the first manifold. The pressure from the combustor 18A or 18B may be created by compressed air from the compressor stage 16A or 16B to overcome residual pressure of the fuel in the deactivated manifold, e.g. second manifold 32 in the example illustrated in FIG. 3B, causing fuel to reverse flow from the nozzles back through the fuel manifolds and into a reservoir.

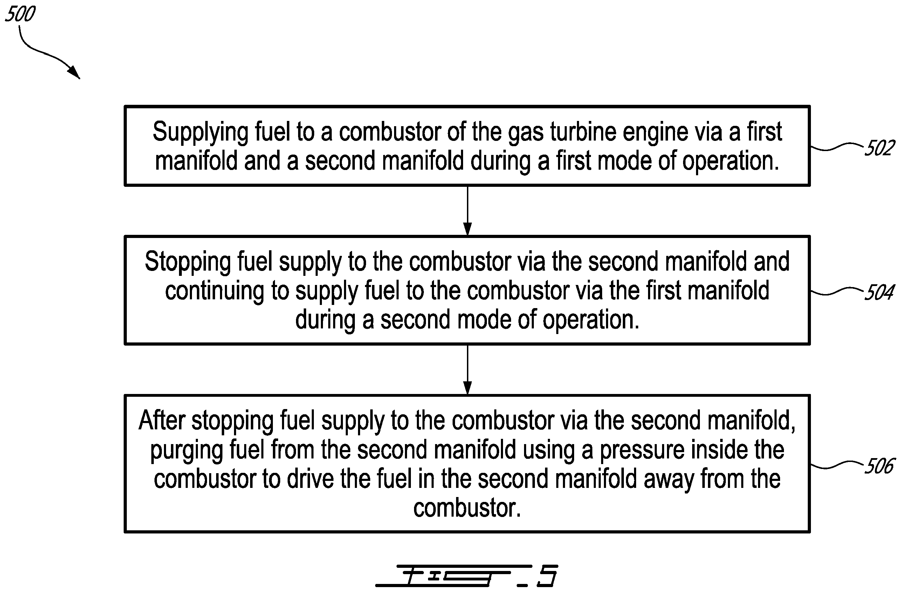

Transition to a standby mode may be explained with reference to the method 500 illustrated in the flow chart of FIG. 5, some embodiments may provide for a method of operating a gas turbine engine. Method 500 or part(s) thereof may be performed using FDA 40 described herein or using other system(s).

At **502**, fuel is supplied to a combustor 18A or 18B of the gas turbine engine 12A or 12B, via a first manifold 31 and a second manifold 32 during a first mode of operation.

At **504**, fuel supply to the combustor 18A or 18B via the second manifold 32 is stopped, while continuing fuel supply to the combustor 18A or 18B via the first manifold 31 during a second mode of operation.

At **506**, after stopping fuel supply to the combustor 18A or 18B via the second manifold 32, fuel from the second manifold 32 is purged using a pressure inside the combustor 18A or 18B to drive the fuel in the second manifold 32 in the upstream direction and away from the combustor 18A or 18B in order to empty the second manifold of fuel.

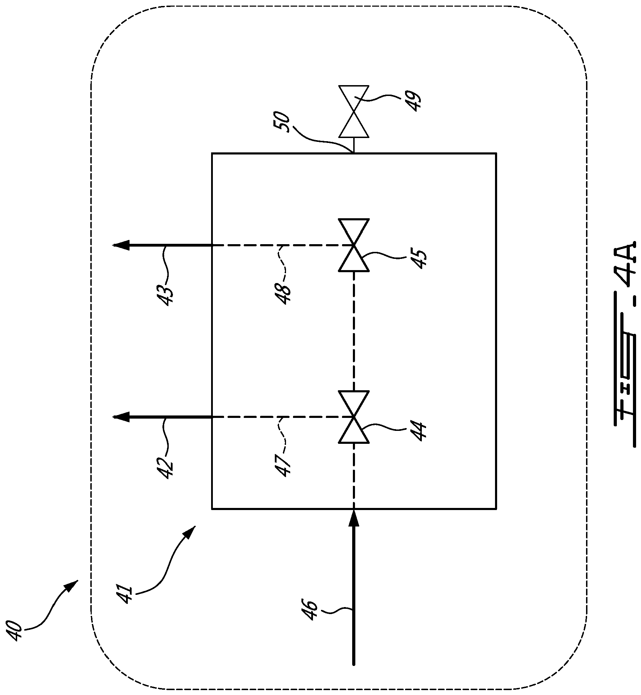

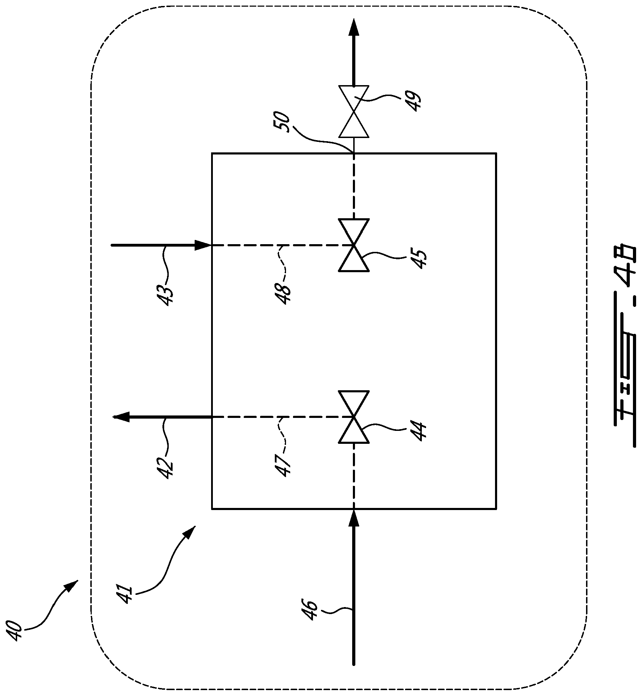

FIG. 4A is a schematic representation of flow divider valve assembly (FDA) 40 that may include one or more spool-type flow divider valves 41 that may be suitable for controlling fuel flow to one or more fuel manifolds 31, 32 of one engine 12A or 12B, and/or purging fuel from one or more fuel manifolds 31, 32 of that engine 12A or 12B when that engine 12A or 12B enters the low-power standby mode of operation during flight, as an ecology system for example. The fuel supplied to the combustion chamber 18A or 18B of the engine 12A or 12B may be supplied via two or more manifolds 31, 32 by way of FDA 40. Outlets 42 and 43 of the flow divider valve 41 illustrated in FIG. 4A may be connected to the first manifold 31 and second manifold 32 respectively. FDA 40 may include two or more separate (e.g., spool-type) flow divider valves 41 in a common housing (or in separate housings) that are positively isolated from each other when one or more of the manifolds 31, 32 are shut off and purged empty from fuel by way of gas (e.g., pressurized air) during engine operation. As shown in FIGs. 4B-4G, the compressed gas that is introduced via the nozzles of the one or more fuel manifolds to be purged may cause the fuel in the manifold(s) 31, 32 and associated nozzles to be (e.g., substantially completely) flushed out of the nozzles and associated manifold(s) 31, 32 into a reservoir of the gas turbine engine. In an embodiment, flow divider valve 41 has one or more pressure-actuator valves, e.g. first valve 44 and second valve 45 shown in FIG. 4A, that may be configured to (1) prevent fuel 46 from flowing through the flow divider valve 41 to the second manifold 32 through outlet 43 when the fuel pressure created by the fuel pump varies to become lower than a first value (e.g., threshold); and (2) to allow fuel to flow only through the first section 47 of the flow divider valve to the first manifold 31; and (3) to allow fuel 46 to flow (illustrated by the arrowed lines in FIG. 4A) through both the first section 47 and second section 48 of the flow divided valve 41 to the respective first and second manifolds 31, 32, and associated nozzles, when the fuel pressure varies to become higher than the first value or a second value (threshold) that is different from the first value.

The first value may be set to optimize the fuel efficiency of the turbine engine(s) 12A, 12B in a standby mode of operation by directing more fuel to an engine 12A or 12B allowing it to operate efficiency while shutting off or reducing flow to another engine 12A or 12B that is operating relatively inefficiently. The second value may be set based on a pressure or flow rates indicative of a flight idle or active mode of operation where the engine 12A or 12B may require more fuel to provide more power. In an embodiment, a reservoir valve 49 may restrict flow to reservoir outlet 50 to prevent fuel from filling the reservoir during the first mode of operation (e.g. flight idle or active operation).

FIG. 4B illustrates an embodiment of FDA 40 in transition to a stanbdy mode, i.e. a second mode of operation. Second flow valve 45 is closed to isolate second section 48 of flow divider valve 41 from first section 47. As such, second manifold 32 is isolated from first manifold 31 and from the fuel source. Reservoir valve 49 is in an open position to permit fuel flow to the reservoir purged form second manifold 32. Fuel flow is indicated by the arrows which illustrate fuel 46 from the fuel pump (not shown) pumped to the first manifold via outlet 42, and fuel purged from the second manifold flowing from outlet 43 to reservoir outlet 50. In an embodiment, FDA 40 does not have a reservoir valve and fuel may flow without restriction to the reservoir.

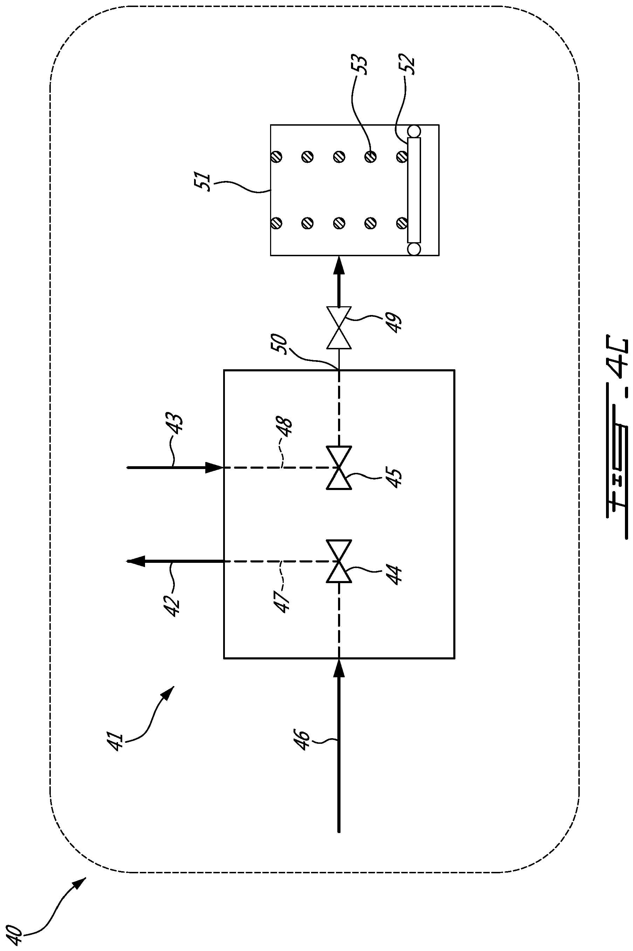

FIG. 4C illustrates the embodiment of FDA 40 according to the invention having a reservoir 51. Similar to FIG. 4B, FDA 40 is illustrated in transition to a standby mode. Reservoir 51 has a variable volume that is manipulated by a piston 52. Piston 52 is biased toward an expanded position in which the variable volume of the reservoir 51 is maximized (shown in FIG. 4C). A biasing member 53, a spring, is configured to bias the piston 52 toward an expanded position. As shown in FIG. 4C, compressed gas pressurizes fuel in the second manifold 32 into the reservoir 51. As the compressed gas pressures the residual fuel in the second manifold 32 into the reservoir 51, biasing member 53 may permit the piston 52 to move toward the expanded position. As reservoir 51 fills with fuel, a corresponding amount of fuel is displaced from the second manifold 32 and associated fuel nozzles, which may reduce the risk of coking in the fuel nozzles. In an embodiment, piston 52 may initially be in the contracted position but is be biased toward the expanded position to expand the variable volume of reservoir 51. As the variable volume of reservoir 51 expands, a suction force may be created to withdraw fuel from secondary manifold 32 into the reservoir 51.

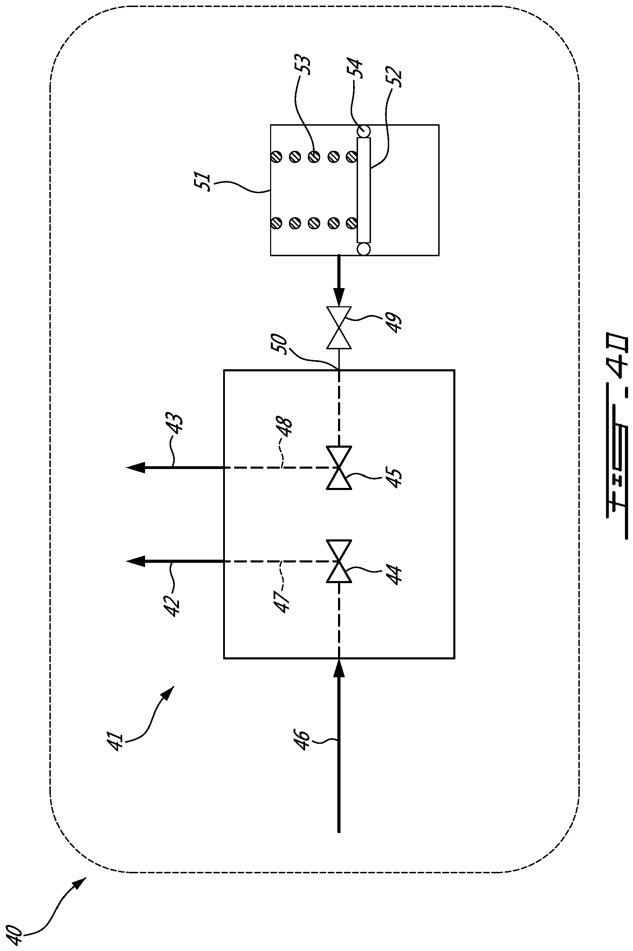

FIG. 4D illustrates an embodiment of FDA 40 not falling under the scope of the present invention which is in transition from a standby mode to flight idle or active power mode. Compressed gas flow to the second manifold 32 is stopped which may permit biasing member 53 to bias piston 52 into a closed position. In the closed position, the variable volume of the reservoir 51 is minimized forcing fuel in the reservoir 51 into the second manifold 32 and to the combustion chamber 18A or 18B. In this illustrated embodiment, when the compressed gas flow to the second manifold is stopped, the pressure of the fuel pump will be greater than the pressure in the second manifold 32, causing the piston 52 to minimize the variable volume of the reservoir and force fuel into the second manifold 32. To re-establish flow to the second manifold, in a flight idle, or active power mode illustrated in FIG 4A, flow valve 45 may be opened and reservoir valve 49 may be closed.

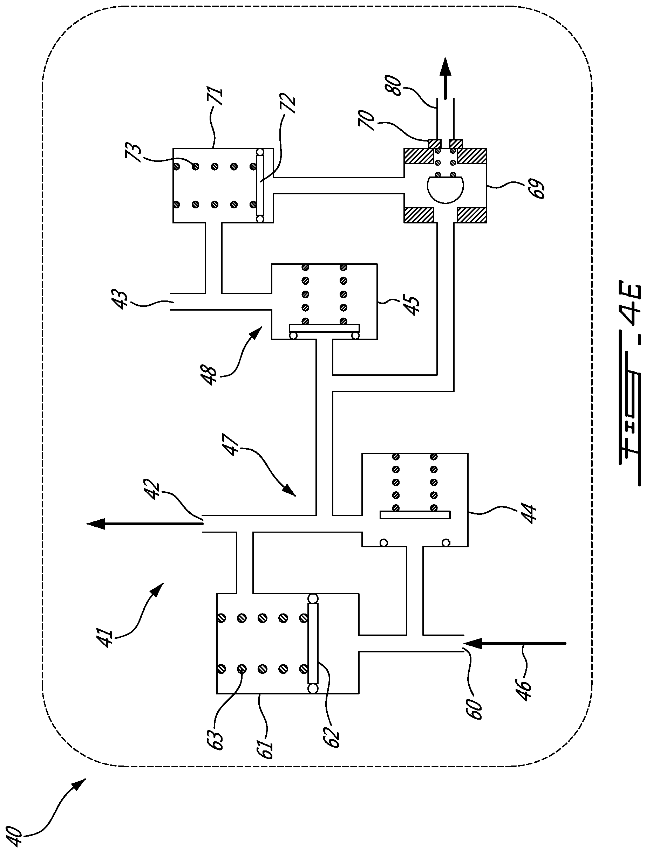

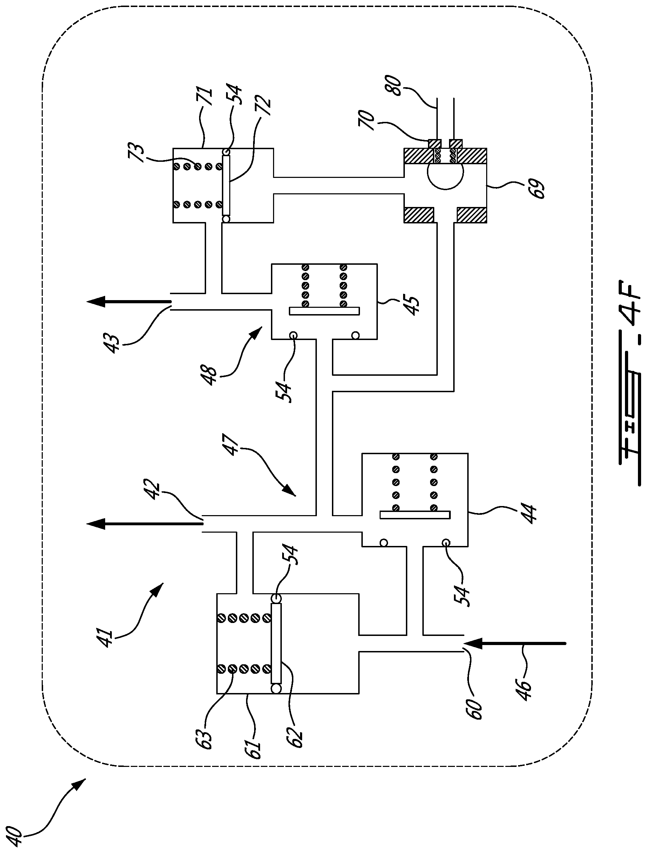

FIGs. 4E-4G illustrate other embodiments of FDA 40. In an embodiment, flow divider valve 41 has one or more pressure-actuator valves, e.g. first valve 44 and second valve 45 shown in FIGs. 4E-4G, that may be configured to (1) prevent fuel 46 from flowing through the flow divider valve 41 to the second manifold 32 through outlet 43 when the fuel pressure created by the fuel pump varies to become lower than a first value (e.g., threshold); (2) to allow fuel to flow only through the first section 47 of the flow divider valve to the first manifold 31; and (3) to allow fuel 46 to flow (illustrated by the arrowed lines in FIG. 4F) through both the first section 47 and second section 48 of the flow divided valve 41 to the respective first and second manifolds 31, 32, and associated nozzles, when the fuel pressure varies to become higher than the first value or a second value (threshold) that is different from the first value. Shuttle valve 69 may also be provided to selectively allow flow to return to tank line 80 which is in communication with a fuel tank (not shown). Shuttle valve 69 may be biased to an open position and configured to close at a third value (e.g. threshold). In an embodiment, the third value may be higher than the first value but the same as second value. In another embodiment, the third value may be higher than both the first and second values.

At start-up of engines 12A, 12B, fuel 46 may be directed to flow divider valve 41 via the fuel-in port 60. Initially, at start-up, valves 44, 45 may be closed and pistons 62, 72 may be biased into an expanded position. Reservoirs 61, 71 have a variable volume that may be manipulated by their respective pistons 62, 72. Pistons 62, 72 may be biased by a biasing member 63, 73, respectively, toward an expanded position in which the variable volume of each reservoir 62, 72 is maximized. As fuel 46 moves into flow divider valve 41, pressure from the fuel may move piston 62 to a contracted position directing fuel in reservoir 61 to the first manifold 31 through outlet 42. As fuel pressure increases, valve 44 may open such that fuel flows through valve 44 to the primary manifold through outlet 42 while valve 45 remains closed (shown in FIG. 4E). Shuttle valve 69, may be initially biased in an open position such that a portion of fuel flowing through valve 44 may pass through outlet 70 to a return to fuel tank line 80.

FIG. 4F illustrates an embodiment of FDA 40 in transition to a flight idle or active mode, i.e. a first mode of operation, pressure increase of fuel 46 may cause valve 45 to open and piston 72 to move to a contracted position pushing fuel in reservoir 71 into the second manifold 32 through outlet 43. Shuttle valve 69 may also close to stop flow to return to tank line 80.

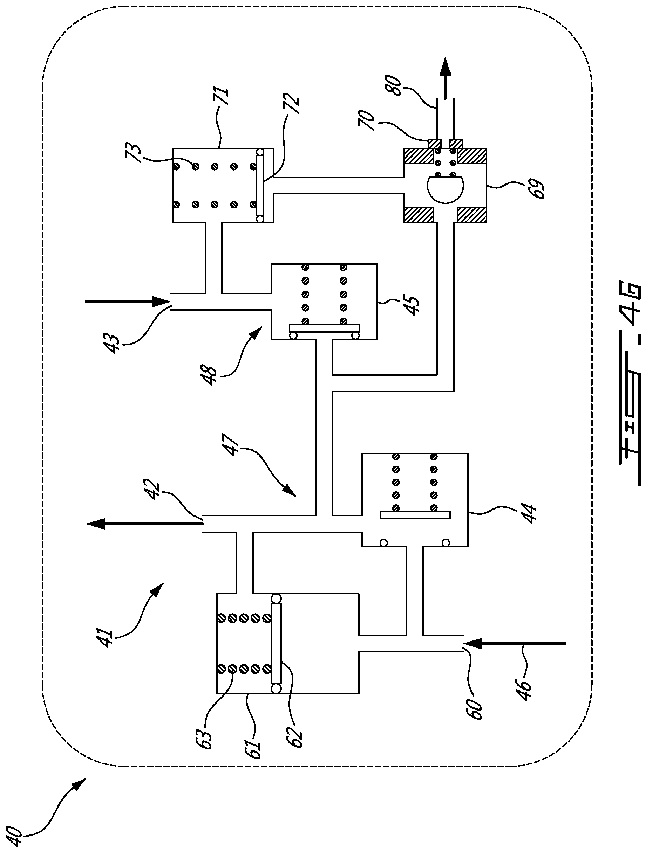

FIG. 4G illustrates an embodiment of FDA 40 in transition to a standby mode, i.e. a second mode of operation. As pressure decreases of fuel 46, second flow valve 45 is closed to isolate second section 48 of flow divider valve 41 from first section 47. As such, second manifold 32 is isolated from first manifold 31 and from the fuel source. Shuttle valve 69 may be biased to an open position to permit fuel flow to the return to fuel tank line 80. Piston 72 may be biased to an extended position to draw fuel from second manifold 32 and associated fuel nozzles. In an embodiment, piston 72 is configured to move to an extended position at the same or a pressure lower than the pressure that valve 45 closes. As such, when valve 45 closes, piston 72 moves to an extended position drawing fuel through outlet 43 from second manifold 32 and its associated nozzles to reservoir 71. As the fuel is drawn away from the nozzles associates with second manifold 32, coking of the nozzles may be prevented or hindered. Compressed gas may also force fuel from second manifold 32 into reservoir 72 due to the back pressure in combustor 18A or 18B (i.e., the pressure of the compressed gas being higher than the pressure of the fuel in second manifold 32). The compressed gas may be prevented from reaching the return to fuel tank line 80 by piston 72 and valve 45. Piston 72 and valve 45 may each be provided with seals 54 to mitigate against reverse flow of fuel and compressed gas from the second manifold 32 to first section 47 or the return to fuel tank line 80.

Transition from the stanbdy mode back to flight idle or active power, may occur following the sequence described above with respect to FIG. 4F.

In some embodiments, the flow divider valve 41 may be capable of positively sealing the manifolds 31, 32 from one another to avoid or significantly limit fuel leakages from a fuel flowing (i.e., active) manifold 31 or 32 to an emptied (i.e., inactive) manifold 31 or 32 and suit the need of keeping one or more of the manifolds 31, 32 empty of fuel during a specific engine operating mode(s). In an embodiment, seals 54 are provided on at least one of valves 44, 45, pistons 52, 62, 72, and shutter valve 69.

Purging residual fuel from one or more manifolds 31, 32 may be done on a continuous basis or intermittently by opening the purge over a short period of time and reclosing it until the next purge sequence.

The embodiments described in this document provide non-limiting examples of possible implementations of the present technology. Upon review of the present disclosure, a person of ordinary skill in the art will recognize that changes may be made to the embodiments described herein without departing from the scope of the present technology as defined by the appended claims.

## Claims

1. A method of operating a gas turbine engine (12A, 12B), the method comprising:
driving a compressor (16A, 16B) to supply pressurized gas to a combustor (18A, 18B) of the gas turbine engine (12A, 12B);
supplying fuel (46) to the combustor (18A, 18B) of the gas turbine engine (12A, 12B) via a first manifold (31) and a second manifold (32) during a first mode of operation;
stopping fuel supply to the combustor (18A, 18B) via the second manifold (32) and continuing to supply fuel (46) to the combustor (18A, 18B) via the first manifold (31) during a second mode of operation; and
after stopping fuel supply to the combustor (18A, 18B) via the second manifold (32), using the pressurized gas inside the combustor (18A, 18B) to drive fuel (46) in the second manifold (32) upstream and purge the second manifold (32) of fuel (46);
supplying fuel (46) to the first manifold (31) while receiving fuel (46) purged from the second manifold (32) into a reservoir (51),
wherein:
purging the second manifold comprises suctioning fuel (46) from the second manifold (32) to purge the second manifold (32) of fuel (46) by a piston (52) configured to move between a first position and a second position;
movement of the piston (52) toward the first position suctions fuel (46) from the second manifold (32) and movement of the piston (52) toward the second position returns fuel (46) to the second manifold (32); and
the piston is biased toward the first position by a spring.

2. The method of claim 1, wherein the gas turbine engine (12A, 12B) is a first gas turbine engine (12A, 12B) drivingly coupled to a load and the method comprises, after stopping fuel supply to the combustor (18A, 18B) via the second manifold (32), operating the first gas turbine engine (12A, 12B) in a low-power mode of operation and operating a second gas turbine engine (12A, 12B) drivingly coupled to the load in a high-power mode of operation.

3. The method of any preceding claim, comprising, after purging fuel (46) from the second manifold (32), resuming fuel supply to the second manifold (32).

4. The method of any preceding claim, wherein the fuel supply to the combustor (18A, 18B) via the second manifold (32) is automatically stopped when a pressure of fuel supplied by a fuel pump is below a threshold.

5. The method of any preceding claim, comprising, after purging fuel (46) from the second manifold (32), automatically resuming fuel supply to the second manifold (32) when a/the pressure of fuel supplied by a/the fuel pump is above a/the threshold.

## Patentansprüche

1. Verfahren zum Betrieb eines Gasturbinenmotors (12A, 12B), wobei das Verfahren Folgendes umfasst:
Antreiben eines Verdichters (16A, 16B), um einer Brennkammer (18A, 18B) des Gasturbinenmotors (12A, 12B) unter Druck stehendes Gas zuzuführen;
Zuführen von Brennstoff (46) zu der Brennkammer (18A, 18B) des Gasturbinenmotors (12A, 12B) über einen ersten Verteiler (31) und einen zweiten Verteiler (32) während eines ersten Betriebsmodus;
Stoppen der Brennstoffzufuhr zu der Brennkammer (18A, 18B) über den zweiten Verteiler (32) und Fortsetzen der Brennstoffzufuhr (46) zu der Brennkammer (18A, 18B) über den ersten Verteiler (31) während eines zweiten Betriebsmodus; und
nach dem Stoppen der Brennstoffzufuhr zu der Brennkammer (18A, 18B) über den zweiten Verteiler (32), Verwenden des unter Druck stehenden Gases im Inneren der Brennkammer (18A, 18B), um Brennstoff (46) in dem zweiten Verteiler (32) stromaufwärts zu treiben und den zweiten Verteiler (32) von Brennstoff (46) zu spülen;
Zuführen von Brennstoff (46) zu dem ersten Verteiler (31) bei gleichzeitigem Aufnehmen von Brennstoff (46), der aus dem zweiten Verteiler (32) in einen Vorratsbehälter (51) gespült wurde,
wobei:
das Spülen des zweiten Verteilers Ansaugen von Brennstoff (46) aus dem zweiten Verteiler (32) umfasst, um den zweiten Verteiler (32) durch einen Kolben (52) von Brennstoff (46) zu spülen, der dazu konfiguriert ist, sich zwischen einer ersten Position und einer zweiten Position zu bewegen;
eine Bewegung des Kolbens (52) in Richtung der ersten Position Brennstoff (46) aus dem zweiten Verteiler (32) ansaugt und eine Bewegung des Kolbens (52) in Richtung der zweiten Position Brennstoff (46) zu dem zweiten Verteiler (32) zurückführt; und
der Kolben durch eine Feder in Richtung der ersten Position vorgespannt wird.

2. Verfahren nach Anspruch 1, wobei es sich bei dem Gasturbinenmotor (12A, 12B) um einen ersten Gasturbinenmotor (12A, 12B) handelt, der antriebsmäßig mit einer Last gekoppelt ist, und wobei das Verfahren nach dem Stoppen der Brennstoffzufuhr zu der Brennkammer (18A, 18B) über den zweiten Verteiler (32) Betreiben des ersten Gasturbinenmotors (12A, 12B) in einem Betriebsmodus mit niedriger Leistung und Betreiben eines zweiten Gasturbinenmotors (12A, 12B), der antriebsmäßig mit der Last gekoppelt ist, in einem Betriebsmodus mit hoher Leistung umfasst.

3. Verfahren nach einem der vorhergehenden Ansprüche, umfassend Wiederaufnehmen der Brennstoffzufuhr zu dem zweiten Verteiler (32) nach dem Spülen von Brennstoff (46) aus dem zweiten Verteiler (32).

4. Verfahren nach einem der vorhergehenden Ansprüche, wobei die Brennstoffzufuhr zu der Brennkammer (18A, 18B) über den zweiten Verteiler (32) automatisch gestoppt wird, wenn ein Druck des von einer Brennstoffpumpe zugeführten Brennstoffs unter einem Schwellenwert liegt.

5. Verfahren nach einem der vorhergehenden Ansprüche, umfassend, nach dem Spülen von Brennstoff (46) aus dem zweiten Verteiler (32), automatisches Wiederaufnehmen der Brennstoffzufuhr zu dem zweiten Verteiler (32), wenn ein/der Druck des von einer/der Brennstoffpumpe zugeführten Brennstoffs über einem/dem Schwellenwert liegt.

## Revendications

1. Procédé de fonctionnement d'un moteur à turbine à gaz (12A, 12B), le procédé comprenant :
l'entraînement d'un compresseur (16A, 16B) pour fournir du gaz sous pression à une chambre de combustion (18A, 18B) du moteur à turbine à gaz (12A, 12B) ;
l'alimentation en carburant (46) de la chambre de combustion (18A, 18B) du moteur à turbine à gaz (12A, 12B) par l'intermédiaire d'un premier collecteur (31) et d'un second collecteur (32) pendant un premier mode de fonctionnement ;
l'arrêt de l'alimentation en carburant de la chambre de combustion (18A, 18B) par l'intermédiaire du second collecteur (32) et la poursuite de l'alimentation en carburant (46) de la chambre de combustion (18A, 18B) par l'intermédiaire du premier collecteur (31) pendant un second mode de fonctionnement ; et
après l'arrêt de l'alimentation en carburant de la chambre de combustion (18A, 18B) par l'intermédiaire du second collecteur (32), l'utilisation du gaz sous pression à l'intérieur de la chambre de combustion (18A, 18B) pour entraîner le carburant (46) dans le second collecteur (32) en amont et purger le second collecteur (32) du carburant (46) ;
l'alimentation en carburant (46) du premier collecteur (31) tout en recevant du carburant (46) purgé à partir du second collecteur (32) dans un réservoir (51),
dans lequel :
la purge du second collecteur comprend l'aspiration de carburant (46) à partir du second collecteur (32) pour purger le second collecteur (32) du carburant (46) par un piston (52) configuré pour se déplacer entre une première position et une seconde position ;
le mouvement du piston (52) vers la première position aspire le carburant (46) à partir du second collecteur (32) et le mouvement du piston (52) vers la seconde position renvoie le carburant (46) vers le second collecteur (32) ; et
le piston est sollicité vers la première position par un ressort.

2. Procédé selon la revendication 1, dans lequel le moteur à turbine à gaz (12A, 12B) est un premier moteur à turbine à gaz (12A, 12B) couplé en entraînement à une charge et le procédé comprend, après l'arrêt de l'alimentation en carburant de la chambre de combustion (18A, 18B) par l'intermédiaire du second collecteur (32), le fonctionnement du premier moteur à turbine à gaz (12A, 12B) dans un mode de fonctionnement à faible puissance et le fonctionnement d'un second moteur à turbine à gaz (12A, 12B) couplé en entraînement à la charge dans un mode de fonctionnement à haute puissance.

3. Procédé selon une quelconque revendication précédente, comprenant, après la purge du carburant (46) à partir du second collecteur (32), la reprise de l'alimentation en carburant du second collecteur (32).

4. Procédé selon une quelconque revendication précédente, dans lequel l'alimentation en carburant de la chambre de combustion (18A, 18B) par l'intermédiaire du second collecteur (32) est automatiquement arrêtée lorsqu'une pression de carburant fournie par une pompe à carburant est inférieure à un seuil.

5. Procédé selon une quelconque revendication précédente, comprenant, après la purge du carburant (46) à partir du second collecteur (32), la reprise automatique de l'alimentation en carburant du second collecteur (32) lorsqu'une/la pression du carburant fournie par une/la pompe à carburant est supérieure à un/au seuil.
